# EUROPEAN PATENT APPLICATION

(11) **EP 4 238 649 A1**
(43) Date of publication of application: **06.09.2023**
(21) Application number: 21886430.4
(22) Date of filing: 01.11.2021
(51) Int. Cl.: B01J 35/04, B01D 53/94, B01J 23/28

(54) **EXHAUST GAS PURIFICATION CATALYST STRUCTURE**

(30) Priority: 02.11.2020 JP 2020183972
(71) Applicant: Mitsubishi Heavy Industries, Ltd., Tokyo 100-8332 (JP)
(72) Inventor: MATSUYAMA, Kotoe, Yokohama-shi, Kanagawa 220-8401 (JP); KAI, Keiichiro, Yokohama-shi, Kanagawa 220-8401 (JP)
(74) Representative: Studio Torta S.p.A.
(86) International application number: PCT/JP2021/040257
(87) International publication number: WO 2022/092313

(57) **Abstract**

A catalyst unit for purifying flue gas, comprising a plurality of platy catalyst elements, wherein the platy catalyst element comprises one flat plate portion and one wavy plate portion, the wavy plate portion has ridges and thalwegs, the platy catalyst elements are stacked each other so that a top of the ridges of the wavy plate portion in one of the platy catalyst elements is in contact with the flat plate portion of another adjacent of the platy catalyst elements and the wavy plate portion secures gas flow paths, the flat plate portion and the wavy plate portion are respectively quadrilateral in view image from normal direction relative to a main face thereof, an edge of the flat plate portion and an edge of the wavy plate portion are connected, and a number of the ridges and a number of the thalwegs are totally not less than 4.

## Description

### TECHNICAL FIELD

The present invention relates to a catalyst unit and a platy catalyst element for purifying flue gas. Specifically, the present invention relates to a catalyst unit and a platy catalyst element for purifying flue gas, having a high rigidity even with a thin plate thickness, having a low SO₂ oxidation activity, and having a high denitration activity.

### BACKGROUND ART

Flue gas purification has been performed, by, in the presence of a denitration catalyst, decomposing nitrogen oxides in gas exhausted from furnace such as boilers in fire power plants or various factories. Various denitration catalyst structures are proposed in order to decompose nitrogen oxides in flue gas with high efficiency.

For instance, Patent document 1 discloses a flue gas purification catalyst structure comprising a plurality of catalyst elements stacked via a netted substance having many holes penetrating front and back thereof, the catalyst element is composed of a base material and catalyst components supported on the surface of the base material, the catalyst element is a flat plate-like catalyst element, the netted substance is one made by bending a rectangular or square flat plate-like netted substance alternately in an opposite direction at a predetermined interval, in a parallel direction to a pair of edges thereof, to form flat portions and stepped portions alternately, or one made by inflecting a rectangular or square flat plate-like netted substance into wavy plate form at a predetermined interval, in a parallel direction to a pair of edges thereof, to form ridge portions and thalweg portions alternately.

Patent document 2 discloses a plate like catalyst assembled structure comprising many platy catalysts stacked via spacers and placed within a unit frame, wherein the platy catalyst comprises ridge parts and flat parts repeated alternately at intervals, the ridge part has a strip-shaped protrusion and is worked as the spacer, and additional belt like protrusion is provided on a portion from the ridge part to the flat part at approximately right angle with the strip-shaped protrusion.

Patent document 3 discloses a catalyst structure comprising a multitude of platy catalyst elements with catalyst component supported on a surface thereof, wherein the platy catalyst element comprises ridge parts and flat parts repeated alternately in parallel, the ridge part is composed of at least two strip-shaped protrusions on front surface and at least two strip-shaped protrusions on back surface adjacently alternately, the number of the strip-shaped protrusions on the front surface is the same as that of the strip-shaped protrusions on the back surface, the platy catalyst elements are stacked and arranged so that the surfaces are alternately inverted, the ridge parts obstruct gas flow, and a tilt angle θ of the ridge part to a direction of the gas flow is more than 0° and not more than 90°.

### CITATION LIST

### PATENT LITERATURES

Patent document 1 : JP 2001-79422 A
Patent document 2 : JP 2000-296333 A
Patent document 3 : JP 2000-117120 A

### SUMMARY OF THE INVENTION

### PROBLEMS TO BE RESOLVED BY THE INVENTION

An object of the present invention is to provide a catalyst unit and a platy catalyst element for purifying flue gas, having a high rigidity even with a thin plate thickness, having a low SO₂ oxidation activity, and having a high denitration activity.

### MEANS FOR SOLVING THE PROBLEMS

Researches in order to solve the problems have resulted in accomplishment of the present invention including the following embodiments.
[1] A catalyst unit for purifying flue gas, comprising a plurality of platy catalyst elements, wherein the platy catalyst element comprises one flat plate portion and one wavy plate portion, the wavy plate portion has ridges and thalwegs, the flat plate portion and the wavy plate portion are respectively quadrilateral in view image from normal direction relative to a main face thereof, an edge of the flat plate portion and an edge of the wavy plate portion are connected, and a number of the ridges and a number of the thalwegs are totally not less than 4, and the platy catalyst elements are stacked each other so that a top of the ridges of the wavy plate portion in one of the platy catalyst elements is in contact with the flat plate portion of another adjacent of the platy catalyst elements and the wavy plate portion secures gas flow paths.
[2] The catalyst unit for purifying flue gas according to [1], wherein the edge of the wavy plate portion connected to the edge of the flat plate portion is a portion on a ridge line or a thalweg line of the wavy plate portion.
[3] The catalyst unit for purifying flue gas according to [1], wherein the edge of the wavy plate portion connected to the edge of the flat plate portion is a portion on a center line between a ridge line and a thalweg line of the wavy plate portion.
[4] A platy catalyst element configured to be used in a catalyst unit for purifying flue gas, comprising one flat plate portion and one wavy plate portion, wherein the wavy plate portion has ridges and thalwegs, the flat plate portion and the wavy plate portion are respectively quadrilateral in view image from normal direction relative to a main face thereof, an edge of the flat plate portion and an edge of the wavy plate portion are connected, and a number of the ridges and a number of the thalwegs are totally not less than 4, wherein the catalyst unit comprises a plurality of the platy catalyst elements, the platy catalyst elements are stacked each other so that a top of the ridges of the wavy plate portion in one of the platy catalyst elements is in contact with the flat plate portion of another adjacent of the platy catalyst elements and the wavy plate portion secures gas flow paths.

### ADVANTAGEOUS EFFECTS OF THE INVENTION

The catalyst unit for purifying flue gas of the present invention has a high rigidity even with a thin plate thickness, has a low SO₂ oxidation activity, and has a high denitration activity. Since the catalyst unit for purifying flue gas of the present invention has a higher denitration performance even in the same catalyst amount compared to the conventional catalyst unit, it is possible to significantly reduce the amount of catalyst usage to ensure the same denitration performance as the conventional catalyst unit.

The catalyst unit for purifying flue gas of the present invention can be preferably used particularly for treating gas containing a relatively large amount of dust discharged from a coal-fired boiler. The platy catalyst element of the present invention can be manufactured inexpensively and easily by press working or the like.

### BRIEF DESCRIPTION OF THE DRAWINGS

[FIG. 1] is a diagram showing one embodiment of the platy catalyst element to be used in the present invention;
[FIG. 2] is a diagram explaining the sizes of the platy catalyst element shown in FIG. 1;
[FIG. 3] is a diagram showing a state in which the platy catalyst elements shown in FIG. 1 are stacked;
[FIG. 4] is a view showing the catalyst unit for purifying flue gas comprising the platy catalyst element shown in FIG. 1;
[FIG. 5] is a diagram showing another embodiment of the platy catalyst element to be used in the present invention and a state in which the platy catalyst elements are stacked;
[FIG. 6] is a diagram showing one embodiment of the platy catalyst element used in the prior art;
[FIG. 7] is a view showing the catalyst unit for purifying flue gas comprising the platy catalyst element shown in FIG. 6.

### EMBODIMENTS FOR CARRYING OUT THE INVENTION

Embodiments of the present invention are specifically described by reference to the drawings. In addition, the scope of the present invention is not limited by the following embodiments.

The catalyst unit for purifying flue gas of the present invention comprises a plurality of platy catalyst elements. The platy catalyst element comprises one flat plate portion and one wavy plate portion. The flat plate portion and the wavy plate portion are respectively quadrilateral in view image from normal direction relative to a main face thereof. It is preferable that the quadrangle projected by the flat plate portion and the quadrangle projected by the wavy plate portion have approximately the same shape and approximately the same largeness. A plate thickness t of the flat plate portion and the wavy plate portion is preferably 0.2 to 1 mm, more preferably 0.3 to 0.7 mm. The production cost is lower and the SO₂ oxidation activity is lower, when the plate thickness is thinner.

The wavy plate portion is a part that is ridged in a wavelike fashion. As the wave shape, mentioned can be a shape corresponding to the fundamental wave such as a sine wave, a rectangular wave, a sawtooth wave, a trapezoidal wave, a triangular wave, and a water surface wave, or a shape corresponding to a synthetic wave (composite wave) composed of the fundamental waves. A shape corresponding to a sine wave or a synthetic wave composed of a triangular wave and a sine wave having the same wavelength and the same phase is preferred in the present invention. A number of the ridges and a number of the thalwegs are totally not less than 4, preferably not less than 6. Heights of all ridges are preferably the same. The height of the ridge, that is, a value (h) corresponding to twice the amplitude is preferably 2 mm to 20 mm. Distance between ridges, that is, a value (d) corresponding to the wavelength, is preferably 3 mm to 40 mm. Angle (β) of the maximum slope of the hillside is preferably 35° to 70°, more preferably 40° to 65°. Peak angle (α) is preferably 40° to 110°, more preferably 50° to 100°. When the angle α or the angle β is within the above range, the contact efficiency between the platy catalyst element and the gas is higher.

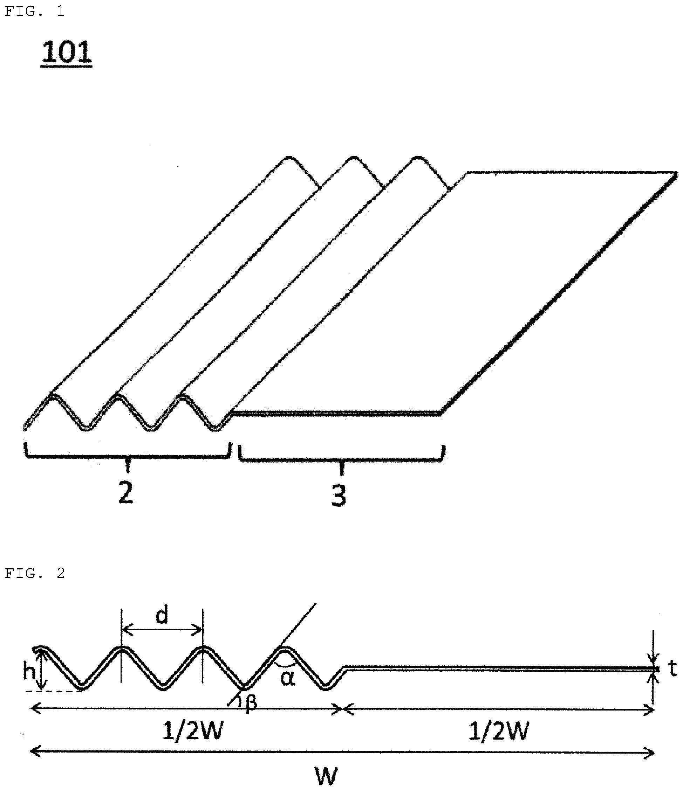

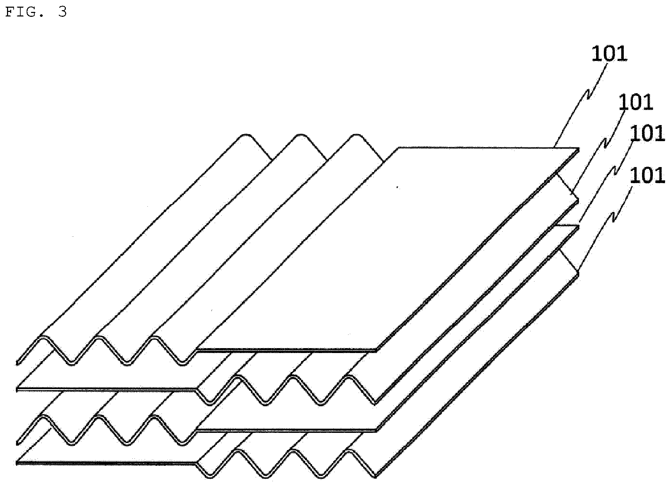

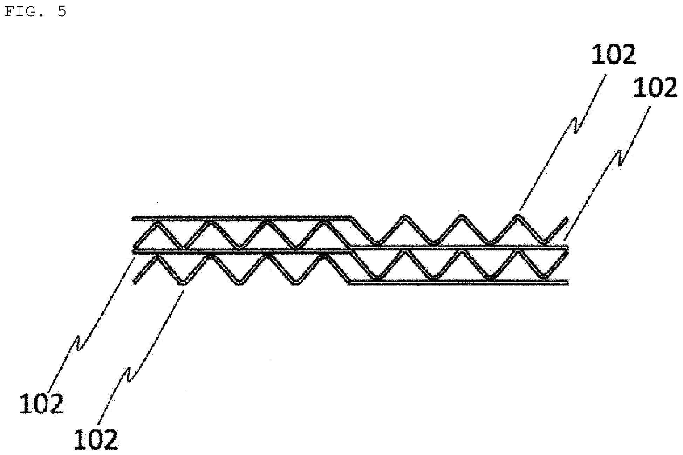

In the platy catalyst element, an edge of the flat plate portion and an edge of the wavy plate portion are connected. In the platy catalyst element 101 as shown in FIG. 1 or 3, the edge of the wavy plate portion 2 connected to the edge of the flat plate portion 3 is a portion on a center line between a ridge line and a thalweg line of the wavy plate portion 2. In the platy catalyst element 102 as shown in FIG. 5, the edge of the wavy plate portion 2 connected to the edge of the flat plate portion 3 is a portion on a ridge line or a thalweg line of the wavy plate portion 2.

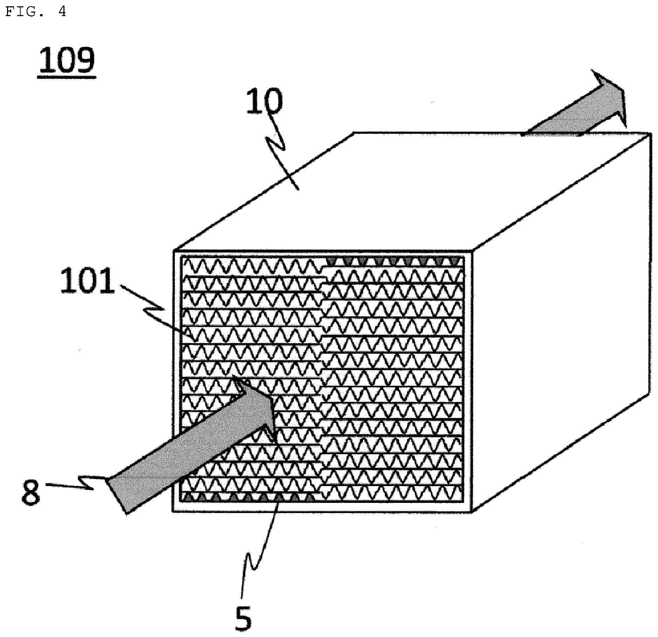

As shown in FIG. 3, the platy catalyst elements are stacked each other so that a top of the ridges of the wavy plate portion in one of the platy catalyst elements is in contact with the flat plate portion of another adjacent of the platy catalyst elements. As shown in FIG. 4, the platy catalyst elements store in the outer frame. The wavy plate portion acts as a spacer, gas flow paths are secured between the platy catalyst elements. Since there are many abutments between the wavy plate portion and the flat plate portion, even if a plate thickness of the platy catalyst element is small, the rigidity of the catalyst unit for purifying flue gas is kept high and can withstand vibrations during transportation. Further, even if a load is applied to pack the platy catalyst elements in the outer frame 10, the platy catalyst element will not be deformed or damaged. Further, the platy catalyst element is not damaged by soot blowing performed when removing accumulated ash, soot, dust and the like.

The platy catalyst element can be obtained, for example, by impregnating or coating a plate-shaped base material such as metal lath, inorganic fiber woven fabric, or inorganic fiber non-woven fabric with a catalyst component to carry the catalyst component on the plate-shaped base material, and then subjecting the product to press working or the like.

The catalyst component is not particularly limited as long as it has a denitration catalytic effect. For example, mentioned can be a titanium-based catalyst comprising oxide of titanium, oxide of molybdenum and/or tungsten, and oxide of vanadium; a zeolite-based catalyst comprising mainly an aluminosilicate such as zeolite on which metals such as Cu and Fe are supported; or a mixed catalyst of the titanium-based catalyst and the zeolite-based catalyst. Among these, the titanium-based catalyst is preferred.

As the titanium-based catalyst, mentioned can be Ti-V-W catalyst, Ti-V-Mo catalyst, Ti-V-W-Mo catalyst and the others. A ratio of V element to Ti element is preferably not more than 10% by weight, more preferably not more than 8% by weight in terms of a weight percentage of V₂O₅/TiO₂. A ratio of Mo element and/or W element to Ti element is preferably not more than 20% by weight in terms of a weight percentage of (M_{O}O₃+WO₃)/TiO₂, when molybdenum oxide and/or tungsten oxide are used.

In the preparation of the titanium-based catalyst, a titanium oxide powder or a titanium oxide precursor can be used as a raw material for the oxide of titanium. As the titanium oxide precursor, mentioned can be a titanium oxide slurry, a titanium oxide sol; titanium sulfate, titanium tetrachloride, titanate, titanium alkoxide, or the like. In the present invention, as a raw material for the oxide of titanium, one that forms anatase-type titanium oxide is preferably used.

As a raw material for the oxide of vanadium, used can be a vanadium compound such as vanadium pentoxide, ammonium metavanadate, vanadyl sulfate and the like.

Ammonium paratungstate, ammonium metatungstate, tungsten trioxide, tungsten chloride, or the like can be used as a raw material for the oxide of tungsten.

Ammonium molybdate, molybdenum trioxide or the like can be used as a raw material for the oxide of molybdenum.

The catalyst components used in the present invention can comprise cocatalyst or additive. As the cocatalyst or additive, mentioned can be oxide of P, oxide of S, oxide of Al (e.g., alumina), oxide of Si (e.g., glass fibers), oxide of Zr (e.g., zirconia), gypsum (eg, gypsum dihydrate, etc.), zeolite, and the like. These can be used in the form of powders, sols, slurries, fibers, or the like during catalyst preparation.

### Example 1

In a kneader, 10 kg of titanium dioxide, 1 kg of ammonium molybdate ((NH₄)₆Mo₇O₂₄4H₂O), 0.3 kg of ammonium metavanadate and 0.5 kg of oxalic acid were mixed and kneaded for 1 hour while adding water. Next, 2 kg of silica-alumina inorganic fibers were added to the kneaded product and kneaded for an additional 30 minutes to obtain a catalyst paste. Using a pair of mill rolls, the obtained catalyst paste was applied on surfaces and in meshes of a previously prepared strip-shaped metal lath made of stainless steel with a width of 500 mm to obtain a strip-shaped catalyst.

A wavy plate portion and a flat plate portion were formed in the strip-shaped catalyst using forming rolls. It was cut to a specified size with a cutting machine to obtain a platy catalyst element 101 having a plate thickness of 0.3 mm, an angle α of 60° and a height h of 6 mm wherein an edge of the flat plate portion and an edge of the wavy plate portion were connected and the edge of the wavy plate portion connected to the edge of the flat plate portion was a portion on a center line between a ridge line and a thalweg line of the wavy plate portion as shown in FIG. 1. A plurality of platy catalyst elements were alternately turned 180° and stacked as shown in FIG. 3, and loaded into an outer frame having a width of 150 mm and a height of 150 mm as shown in FIG. 4. This was air-dried for 24 hours and then calcined at 500°C for 2 hours while flowing air to obtain a catalyst unit for purifying flue gas. In addition, ribs 5 were provided on an inner surface of the outer frame facing the flat plate portion in order to support the flat plate portion of the platy catalyst element positioned at the outermost position when the platy catalyst elements were stacked. Even when the plate thickness was 0.3 mm, the wavy plate portion was not deformed and a sufficient gap could be secured between the flat plate portions.

The catalyst unit for purifying flue gas was set in a denitration reactor, and a simulant flue gas containing 350 ppm of NOx, 4% of O₂, 120 of H₂O and 350 ppm of NH₃ was passed at a temperature of 350°C and 6 m/sec to measure denitration ratio. Then, a simulant flue gas containing 2000 ppm of SOx, 4% of O₂, and 120 of H₂O was passed at a temperature of 380°C and 6 m/sec to measure SO₂ oxidation ratio. Table 1 shows relative values of denitration ratio and SO₂ oxidation ratio in Example 1 with respect to denitration ratio and SO₂ oxidation ratio in Comparative Example 1.

### Example 2

By the bending and cutting process, made from the strip-shaped catalyst obtained in Example 1 was a platy catalyst element comprising a flat plate portion and a wavy plate portion and having a plate thickness of 0.3 mm, an angle α of 60° and a height h of 6 mm wherein an edge of the flat plate portion and an edge of the wavy plate portion were connected and the edge of the wavy plate portion connected to the edge of the flat plate portion was a portion on a ridge line or a thalweg line of the wavy plate portion. A plurality of platy catalyst elements 102 were alternately turned inside out and stacked as shown in FIG. 5, and loaded into an outer frame having a width of 150 mm and a height of 150 mm. This was air-dried for 24 hours and then calcined at 500°C for 2 hours while flowing air to obtain a catalyst unit for purifying flue gas. Even when the plate thickness was 0.3 mm, the wavy plate portion was not deformed and a sufficient gap could be secured between the flat plate portions. Table 1 shows relative values of denitration ratio and SO₂ oxidation ratio in Example 2 with respect to the denitration ratio and SO₂ oxidation ratio in Comparative Example 1.

### Comparative Example 1

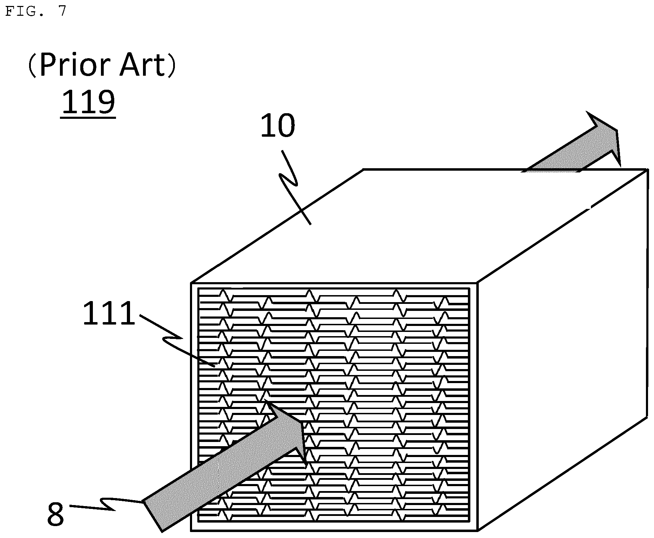

By the bending and cutting process, made from the strip-shaped catalyst obtained in Example 1 was a platy catalyst element comprising four flat plate portions and three protrusion line portions and having a plate thickness of 0.3 mm, an angle α of 60° and a height h of 6 mm. A plurality of platy catalyst elements 111 were alternately turned 180° and stacked as shown in FIG. 7, and loaded into an outer frame having a width of 150 mm and a height of 150 mm. The protrusion line portions was deformed and a sufficient gap could not be secured between the flat plate portions. This was air-dried for 24 hours and then calcined at 500°C for 2 hours while flowing air to obtain a catalyst unit for purifying flue gas.

### Comparative Example 2

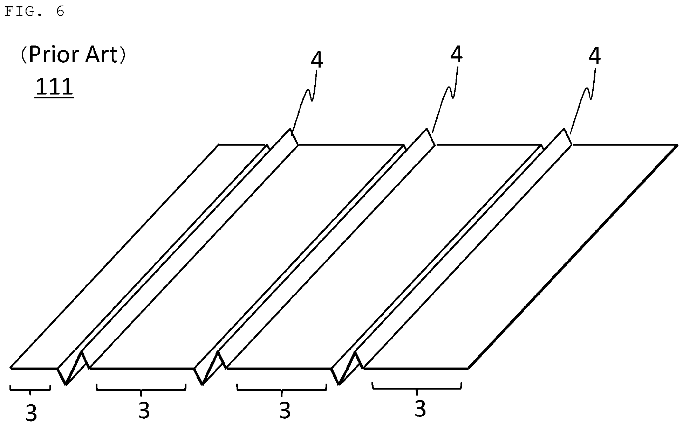

A platy catalyst element 111 as shown in FIG. 6 was obtained in the same manner as in Comparative Example 1 except that the plate thickness was changed to 1 mm, wherein the platy catalyst element 111 had a plate thickness of 1 mm, an angle α of 60°, a height h of 6 mm, and comprised four flat plate portions and three protrusion line portions. A plurality of platy catalyst elements 111 were alternately turned 180° and stacked as shown in FIG. 7, and loaded into an outer frame having a width of 150 mm and a height of 150 mm. This was air-dried for 24 hours and then calcined at 500°C for 2 hours while flowing air to obtain a catalyst unit for purifying flue gas. The plate thickness of 1 mm resulted in no deformation of the protrusion line portions. Table 1 shows relative values of denitration ratio and SO₂ oxidation ratio in Comparative Example 2 with respect to the denitration ratio and SO₂ oxidation ratio in Comparative Example 1.

### [TAB. 1]

**TABLE 1**

| | relative denitration ratio | relative SO₂-oxdation ratio |
|---|---|---|
| Ex. 1 | 1.21 | 1.03 |
| Ex. 2 | 1.23 | 1.05 |
| Comp.Ex.1 | 1 | 1 |
| Comp.Ex.2 | 1.17 | 2.86 |

### CODE LIST

- 101, 102 :: platy catalyst element of the present invention
- 111 :: platy catalyst element of prior art
- 2 :: wavy plate portion
- 3 :: flat plate portion
- 4 :: protrusion line portion
- 5 :: rib
- 8 :: flue gas
- 10 :: outer frame

## Claims

1. A catalyst unit for purifying flue gas, comprising a plurality of platy catalyst elements, wherein
the platy catalyst element comprises one flat plate portion and one wavy plate portion, the wavy plate portion has ridges and thalwegs, the flat plate portion and the wavy plate portion are respectively quadrilateral in view image from normal direction relative to a main face thereof, an edge of the flat plate portion and an edge of the wavy plate portion are connected, and a number of the ridges and a number of the thalwegs are totally not less than 4, and
the platy catalyst elements are stacked each other so that a top of the ridges of the wavy plate portion in one of the platy catalyst elements is in contact with the flat plate portion of another adjacent of the platy catalyst elements and the wavy plate portion secures gas flow paths.

2. The catalyst unit for purifying flue gas according to claim 1, wherein the edge of the wavy plate portion connected to the edge of the flat plate portion is a portion on a ridge line or a thalweg line of the wavy plate portion.

3. The catalyst unit for purifying flue gas according to claim 1, wherein the edge of the wavy plate portion connected to the edge of the flat plate portion is a portion on a center line between a ridge line and a thalweg line of the wavy plate portion.

4. A platy catalyst element configured to be used in a catalyst unit for purifying flue gas, comprising one flat plate portion and one wavy plate portion, wherein
the wavy plate portion has ridges and thalwegs, the flat plate portion and the wavy plate portion are respectively quadrilateral in view image from normal direction relative to a main face thereof, an edge of the flat plate portion and an edge of the wavy plate portion are connected, and
a number of the ridges and a number of the thalwegs are totally not less than 4,
wherein the catalyst unit comprises a plurality of the platy catalyst elements, the platy catalyst elements are stacked each other so that a top of the ridges of the wavy plate portion in one of the platy catalyst elements is in contact with the flat plate portion of another adjacent of the platy catalyst elements and the wavy plate portion secures gas flow paths.
